# EUROPEAN PATENT APPLICATION

(11) **EP 2 352 306 A1**
(43) Date of publication of application: **03.08.2011**
(21) Application number: 10193869.4
(22) Date of filing: 06.12.2010
(51) Int. Cl.: H04R 1/00, H04M 1/60

(54) **Apparatus and Method for Increasing Volume in Portable Terminal**

(30) Priority: 09.12.2009 KR 20090121567
(71) Applicant: SAMSUNG ELECTRONICS CO., LTD., Suwon-si, Gyeonggi-do (KR)
(72) Inventor: Jung, Ra-Mi, Gyeonggi-do (KR); Kim, Sung-Cheol, Gyeonggi-do (KR); Lee, Nam-Il, Gyeonggi-do (KR); Yang, Dong-Ik, Gyeonggi-do (KR); Ccho, Chi-Hyun, Gyeonggi-do (KR)
(74) Representative: Jenkins, Richard Gavin

(57) **Abstract**

An apparatus and method for increasing an audio volume in a portable terminal are provided. The apparatus includes a sound booster for increasing a volume of a final audio signal comprising at least one sound source data to be output through an audio hardware, and a speaker for converting audio data having a volume increased by the sound booster into a sound signal to play the converted sound signal.

## Description

### BACKGROUND OF THE INVENTION

### 1. Field of the Invention:

The present invention relates to a portable terminal. More particularly, the present invention relates to an apparatus and method for increasing a volume in a portable terminal.

### 2. Description of the Related Art:

In modem society, the penetration rate of portable terminals has drastically increased due to their convenience and necessity, such that the portable terminals are now becoming necessities. Accordingly, service providers and terminal manufacturers are providing additional functions to increase utilization of the portable terminals.

A portable terminal includes a speaker for functions using sound, such as a ringtone or music playback. The speaker of the portable terminal is designed to satisfy a certain sound specification, thereby providing clarity and listening sensitivity to a user. However, for improved portability, the portable terminal aims for a more lightweight, small-sized, and slim design.

Due to the slim design of the portable terminal, a speaker installation space for a speaker required to satisfy the sound specification may not be large enough. In the case where the installation space for the speaker is not large enough, a small-sized speaker should be installed. In this case, since a sufficient acoustic space may not be available, a desired sound volume may not be provided.

Thus, there exists a need for a counterproposal for satisfying the sound specification of the portable terminal in which the installation space for the speaker is not enough.

### SUMMARY OF THE INVENTION

An aspect of the present invention is to address at least the above-mentioned problems and/or disadvantages and to provide at least the advantages described below. Accordingly, an aspect of the present invention is to provide an apparatus and method for satisfying a sound specification of a portable terminal.

Another aspect of the present invention is to provide an apparatus and method for increasing an audio volume in a portable terminal.

Another aspect of the present invention is to provide an apparatus and method for increasing a software volume when a speaker that does not satisfy a sound specification is used in a portable terminal.

In accordance with an aspect of the present invention, a portable terminal is provided. The terminal includes a sound booster for increasing a volume of a final audio signal comprising at least one sound source data to be output through an audio hardware, and a speaker for converting audio data having a volume increased by the sound booster into a sound signal to play the converted sound signal.

In accordance with another aspect of the present invention, a method for outputting an audio signal of a portable terminal is provided. The method includes increasing a volume of a final audio signal comprising at least one sound source data to be outputted through an audio hardware, and converting audio data having an increased volume into a sound signal to play the converted sound signal.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram of a portable terminal according to an exemplary embodiment of the present invention; and

FIG. 2 is a flowchart illustrating an audio output process of a portable terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention are provided for purposes of illustration only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

A technology for increasing a sound volume of a speaker in a portable terminal will be described below. In the following description, the term "portable terminal" includes cellular phones, Personal Communication Systems (PCSs), Personal Digital Assistants (PDAs), International Mobile Telecommunication-2000 (IMT-2000) terminals, laptop computers, and netbooks.

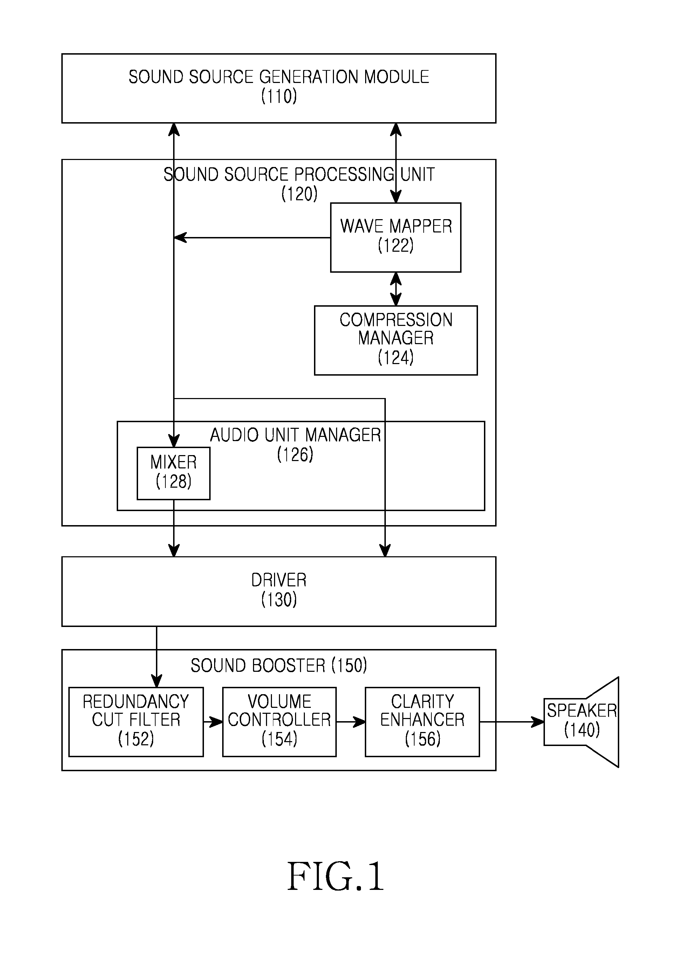

FIG. 1 is a block diagram of a portable terminal according to an exemplary embodiment of the present invention. For convenience of descriptions, FIG. 1 illustrates only those components for an audio output. However, the portable terminal according to the present invention may further include components of a general portable terminal such as a unit for communication, a unit for recognizing an input of a user, a unit for displaying an image, and a unit for storing data.

Referring to FIG. 1, the portable terminal includes a sound source generation module 110, a sound source processing unit 120, a driver 130, a speaker 140, and a sound booster 150.

The sound source generation module 110 executes a user's application to output data of sound sources stored in the portable terminal. For example, the sound source generation module 110 operates based on an Application Programming Interface (API). The sound source generation module 110 may include a waveform audio API outputting the sound source data and a mixer API controlling hardware mixing. The sound source data outputted from the sound source generation module 110 may be pulse code modulation audio data or compressed data.

The sound source processing unit 120 processes the audio data for playback of the sound sources through the speaker 140. Referring again to FIG. 1, the sound source processing unit 120 includes a wave mapper 122, a compression manager 124, an audio unit manager 126, and a mixer 128.

The wave mapper 122 processes the compressed audio date provided from the sound source generation module 110 to control the compression manager 124. The compression manager 124 is a block for managing an audio COding-DECoding (CODEC). Thus, the compression manager 124 decides format of the compressed audio data and releases the compression of the audio data in real time using a CODEC according to the format. As necessary, the compression manager 124 performs filtering and format conversion with respect to the audio data.

The audio unit manager 126 provides functions for controlling an audio hardware such as the speaker 140 and Pulse Code Modulation (PCM) audio data to the driver 130. The functions provided by the audio unit manager 126 are hardware-dependent and depends on an Operation System (OS) of the portable terminal. The mixer 128 performs software mixing with respect to the plurality of sound sources. That is, the mixer 128 combines the plurality of PCM audio signals provided from the sound source generation module 110 or the plurality of released PCM audio signals provided from the wave mapper 122 into one PCM audio signal.

The driver 130 converts the functions provided from the audio unit manager 126 into a hardware-dependent command signal to provide the command signal to the speaker 140 and the PCM audio data to the sound booster 150. The speaker 140 is an audio hardware for outputting sounds. The speaker 140 converts the PCM audio signal provided from the sound booster 150 into a sound signal according to the command signal provided from the driver 130 to play the converted sound signal.

The sound booster 150 increases a volume of the PCM audio signal provided from the driver 130, i.e., a volume of a final audio signal outputted from the speaker 140. That is to say, the sound booster 150 increases a volume of the entire PCM audio signal outputted through the speaker 140. Referring again to FIG. 1, the sound booster 150 includes a redundancy cut filter 152, a volume controller 154, and a clarity enhancer 156.

The redundancy cut filter 152 removes a signal having a low frequency band of the final audio signal, i.e., a signal having a band, which is not output through the speaker 140. Due to the removal of the signal of the low frequency band, a vibration of the speaker 140 due to playback of the low frequency signal is reduced, and a volume of a high-pitched sound is increased due to a relative reduction of the low-pitched sound. The volume controller 154 increases an amplitude of the final audio signal provided from the redundancy cut filter 152. That is, the volume controller 154 increases the volume by increasing an amplitude of the final audio signal. Here, the volume controller 154 increases the amplitude of the signal so that an original amplitude of the signal is linearly or non-linearly increased. The clarity enhancer 156 improves clarity of the final audio signal provided from the volume controller 154. Due to the improved clarity, user's listening sensitivity may be improved, and thus, a volume of sound having middle and high frequency bands may be relatively increased.

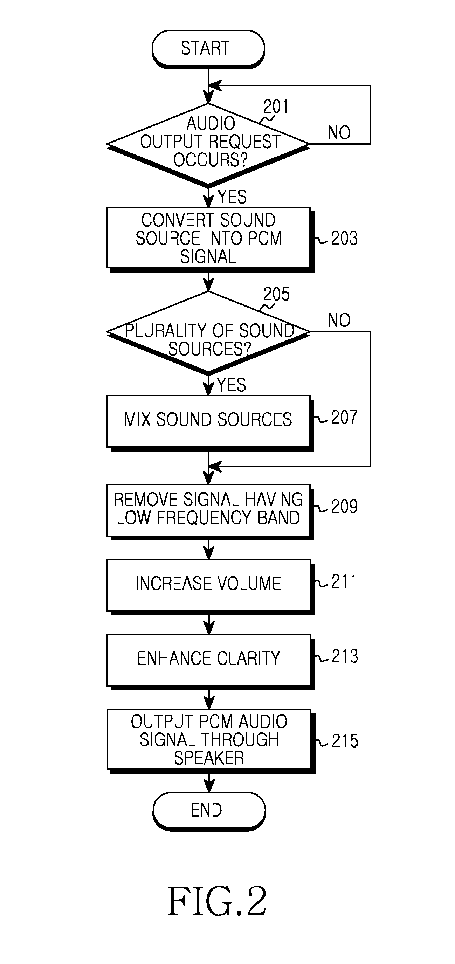

FIG. 2 is a flowchart illustrating an audio output process of a portable terminal according to an embodiment of the present invention.

Referring to FIG. 2, the portable terminal determines whether an audio output request occurs in step 201. For example, the audio output request may occur by a sound source data playback command of the user, a key tone output by a user's key input, and a ring tone output by a call reception.

When the audio output request occurs, the process of the portable terminal proceeds to step 203 to convert the sound source of the audio output into a PCM audio signal. However, when the sound source of the audio output is stored in a form of the PCM audio signal, step 203 may be omitted. Thus, when the sound source of the audio output is compressed or stored in a form of a signal different from the PCM audio signal, the process of the portable terminal performs step 203. Here, the sound source of the audio output may be provided in plurality. In this case, the portable terminal may convert a portion of the sound source into the PCM audio signal, but may not convert the remnant portion of the sound source into the PCM audio signal.

Thereafter, the process of the portable terminal proceeds to step 205 to determine whether a plurality of sound sources of the audio output exists. That is, the portable terminal determines whether an output request with respect to at least two or more sound sources occurs. For example, the portable terminal determines whether an output request of the key tone during the playback of the sound source data or during the output of the ring tone occurs.

If it is determined in step 205 that the plurality of sound sources of the audio output exists, the process of the portable terminal proceeds to step 207 to mix the plurality of sound sources. That is, the portable terminal combines a plurality of PCM audio signals or decompressed PCM audio signals into one PCM audio signal to generate a final audio signal.

In contrast, if it is determined in step 205 that the plurality of sound sources of the audio output does not exist, the process proceeds to step 209.

In step 209, the process of the portable terminal removes the final audio signal having a low frequency band, i.e., a signal having a frequency band, which is not outputted through the speaker. Since the signal having the low frequency band is removed, a vibration of the speaker due to a playback of a low-pitched sound is reduced, and a volume of a high-pitched sound is increased due to the relative reduction of the low-pitched sound.

After the signal having the low frequency band is removed, the process of the portable terminal proceeds to step 211 to increase a volume of the final audio signal. That is, the portable terminal increases an amplitude of the final audio signal to increase the volume of the final audio signal. Here, the portable terminal increases the amplitude of the signal so that a ratio of an increased amplitude to an original amplitude is linearly or non-linearly is increased.

After the volume is increased, the process of the portable terminal proceeds to step 213 to improve the clarity of the final audio signal. Due to the improved clarity, user's listening sensitivity may be improved, and thus, a volume of a sound having middle and high frequency bands may be relatively increased.

Thereafter, the process of the portable terminal proceeds to step 215 to output the PCM audio signal in which the signal having the low frequency band is removed, the volume is increased, and the clarity is enhanced, through the speaker.

Although the portable terminal of this example does not have a sufficient speaker installation space required to satisfy the sound specification, the present invention allows the sound specification to be satisfied through a software volume increase.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A portable terminal comprising:
a sound booster increasing a volume of a final audio signal comprising at least one sound source data to be output through an audio hardware; and
a speaker converting audio data having a volume increased by the sound booster into a sound signal to play the converted sound signal.

2. The portable terminal of claim 1, further comprising a mixer mixing the at least one sound source into one PCM sound source data.

3. The portable terminal of claim 1, further comprising a compression manager performing a decompression in real-time with respect to at least one compressed sound source data when the at least one compressed sound source data exists in the at least one sound source data.

4. The portable terminal of claim 1, wherein the sound booster increases the volume of the final audio signal through at least one of a function for removing a signal comprising a low frequency band in the final audio signal, a function for increasing an amplitude of the final audio signal, and a function for enhancing a clarity of the final audio signal.

5. The portable terminal of claim 4, wherein the signal comprising the low frequency band comprises a signal which is not output through the speaker.

6. The portable terminal of claim 4, wherein the sound booster increases the amplitude of the final audio signal so that a ratio of the increased amplitude to an original amplitude is linearly or non-linearly increased.

7. A method for outputting an audio signal of a portable terminal, the method comprising:
increasing a volume of a final audio signal comprising at least one sound source data to be output through an audio hardware; and
converting audio data having an increased volume into a sound signal to play the converted sound signal.

8. The method of claim 7, further comprising mixing the at least one sound source into one PCM sound source data.

9. The method of claim 7, further comprising performing a decompression in real-time with respect to at least one compressed sound source data when the at least one compressed sound source data exists in the at least one sound source data.

10. The method of claim 7, wherein the increasing of the volume of the final audio signal comprises increasing the volume of the final audio signal through at least one of a function for removing a signal comprising a low frequency band in the final audio signal, a function for increasing an amplitude of the final audio signal, and a function for enhancing a clarity of the final audio signal.

11. The method of claim 10, wherein the signal comprising the low frequency band comprises a signal which is not output through the speaker.

12. The method of claim 10, wherein the increasing of the volume of the final audio signal comprises increasing the amplitude of the final audio signal so that a ratio of the increased amplitude to an original amplitude is linearly or non-linearly increased.
